# EUROPÄISCHE PATENTSCHRIFT

(11) **EP 0 787 928 B1**
(45) Veröffentlichungstag und Bekanntmachung des Hinweises auf die Patenterteilung: **29.03.2000**
(21) Anmeldenummer: 97101177.0
(22) Anmeldetag: 25.01.1997
(51) Int. Cl.: F16H 55/56

(54) **Druckzuführung für eine Kegelscheibe**
Pressure supply for an adjustable conical pulley
Système d'alimentation en pression pour une poulie conique

(30) Priorität: 01.02.1996 DE 19603598
(43) Veröffentlichungstag der Anmeldung: 06.08.1997
(73) Patentinhaber: ZF-Batavia, L.L.C., Plymouth, Michigan 48170-2456 (US)
(72) Erfinder: Rowe, Gerald, 88131 Lindau (DE)
(74) Vertreter: Zietlow, Karl-Peter

(56) Entgegenhaltungen:
- EP-A- 0 318 635
- DE-A- 4 215 925
- FR-A- 2 636 701
- US-A- 3 782 213
- PATENT ABSTRACTS OF JAPAN vol. 10, no. 204 (M-499), 17.Juli 1986 & JP 61 045166 A (DAIHATSU), 5.März 1986,

## Beschreibung

Die Erfindung betrifft eine Einrichtung für die Druckzuführung zu einer Kegelscheibe eines CVT.

Stufenlose Automatgetriebe, nachfolgend CVT genannt, bestehen aus folgenden Baugruppen: Anfahreinheit, Vorwärts-/Rückwärtsfahreinheit, Variator, Differential, elektronischem und hydraulischem Steuergerät. Der Variator wiederum besteht aus einem auf einer Primärwelle angeordneten ersten Kegelscheibenpaar, einem auf einer Sekundärwelle angeordneten zweiten Kegelscheibenpaar und einem Umschlingungsorgan, zum Beispiel Schubgliederband. Jedes Kegelscheibenpaar besteht aus einer in axialer Richtung feststehenden ersten Kegelscheibe und einer in axialer Richtung verschiebbaren zweiten Kegelscheibe. Über die Änderung der axialen Position der zweiten Kegelscheibe ändert sich der Laufradius des Umschlingungsorgans und somit die Übersetzung des CVT. Die zweite Kegelscheibe bildet mit einer feststehenden und einer beweglichen Wand eine Zylinder-Kolben-Einheit mit einer ersten und einer zweiten Kammer. Über die Variation des Druckniveaus in der ersten Kammer wird nun die axiale Position der zweiten Kegelscheibe verändert. Die zweite Kammer dient dem dynamischen Druckausgleich. Bekanntermaßen verursacht die Rotation der Zylinder-Kolben-Einheit über die Fliehkraft eine ungleiche Verteilung des Druckmediums. Als Wirkung hiervon tritt eine drehzahlabhängige, zusätzliche, vom statischen Druck unabhängige, axiale Kraftkomponente auf. Diese zusätzliche axiale Kraftkomponente wird nun über ein entsprechendes Druckniveau in der zweiten Kammer kompensiert. In diesem Zusammenhang ist aus der ATZ Automobiltechnische Zeitschrift 96 (1994), Seite 380, eine Einrichtung zur Druckzuführung für das auf der Sekundärwelle angeordnete Kegelscheibenpaar bekanntgeworden. Hierbei ist die Sekundärwelle als Hohlwelle ausgebildet. Innerhalb der Hohlwelle ist ein Druckzuführungsrohr angeordnet. Das eine Ende des Druckzuführungsrohres ist in der Hohlwelle eingepreßt, d. h., Hohlwelle und Druckzuführungsrohr drehen sich mit der gleichen Drehzahl. Am anderen Ende ist das Druckzuführungsrohr über eine Buchse drehbar in einem Getriebegehäuse gelagert. Die Druckzuführung zur ersten Kammer geschieht über das Innere des Druckzuführungsrohres. Die Druckzuführung zur zweiten Kammer geschieht über einen Zylinderraum. Dieser Zylinderraum entsteht dadurch, daß das Druckzuführungsrohr einen geringeren Außendurchmesser als die Bohrung der Hohlwelle aufweist.

Aus der gattungsgemäßen EP-A-318 635 ist eine Einrichtung für die Druckzuführung zu einer Sekundärwelle eines CVT bekannt, bei der durch das Innere des Druckzuführungsrohrs sowohl die erste als auch die zweite Kammer befüllt werden, wobei das Druckzuführungsrohr auf der einen Seite über eine aufwendige Konstruktion mit Buchse, Haltering und O-Ring-Abdichtungen druckseitig mit dem Getriebegehäuse verbunden wird. Die andere Seite des Druckzuführungsrohrs stützt sich über eine Buchse im hohlen Abschnitt der Sekundärwelle ab.

Die Erfindung hat zur Aufgabe, ausgehend von dem beschriebenen Stand der Technik diesen weiterzuentwickeln.

Die Aufgabe wird erfindungsgemäß in einer ersten Ausführung gelöst, indem das Druckzuführungsrohr auf der einen Seite fest mit dem Getriebegehäuse verbunden ist. Das Lager zur Abstützung des Druckzuführungsrohrs ist in die Sekundärwelle eingepreßt. Das Lager dient zugleich als Spaltabdichtung, über dieses Lager wird die zweite Kammer befüllt wird. Die erfindungsgemäße Lösung bietet den Vorteil, daß das Druckzuführungsrohr, welches als einzige externe Druckzuführung zur Sekundärwelle die erste und zweite Kammer mit dem Druckmedium befüllt, im Getriebegehäuse axial und radial eingespannt ist und Undichtigkeiten dadurch wirksam verhindert werden. Beim Stand der Technik nach ATZ Automobiltechnische Zeitung 96 (1994), Seite 380, kann es an dieser Stelle aufgrund der unterschiedlichen Wärmeausdehnungskoeffizienten des Getriebegehäuses, dieses ist zum Beispiel aus Aluminium hergestellt, und der Buchse, diese ist zum Beispiel aus Stahl hergestellt, zu Undichtigkeiten kommen.

Eine zweite Lösung besteht darin, daß das Druckzuführungsrohr auf der einen Seite fest mit dem Getriebegehäuse verbunden ist und sich auf der anderen Seite über einen Rechteckring im hohlen Abschnitt der Sekundärwelle abstützt. Die Druckmittelzufuhr zur ersten und zur zweiten Kammer erfolgt wiederum durch das Innere des Druckzuführungsrohrs, wobei die zweite Kammer über die Leckage am Rechteckring befüllt wird.

In den Zeichnungen ist ein Ausführungsbeispiel dargestellt.
Es zeigen:
- Fig. 1: ein Systemschaubild eines CVT;
- Fig. 2: ein Schnittbild der Sekundärwelle.

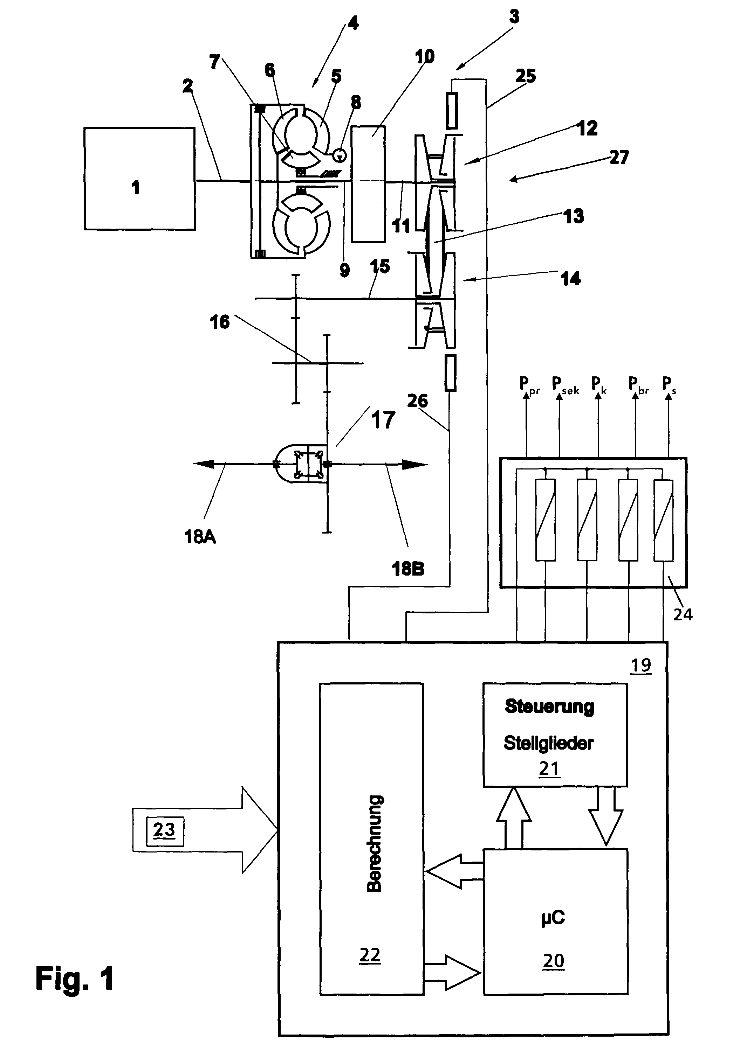

Fig. 1 zeigt ein Systemschaubild, bestehend aus einer Antriebseinheit 1, zum Beispiel Brennkraftmaschine, einem CVT 3, einem hydraulischen Steuergerät 24 und einem elektronischen Steuergerät 19. Das CVT 3 wird von der Antriebseinheit 1 über eine Antriebswelle 2 angetrieben. Die Antriebswelle 2 treibt eine Anfahreinheit an. In Fig. 1 ist als Anfahreinheit ein hydrodynamischer Wandler 4 dargestellt. Der hydrodynamische Wandler 4 besteht bekanntermaßen aus einem Pumpenrad 5, Turbinenrad 6 und Leitrad 7. Parallel zum hydrodynamischen Wandler ist eine Wandlerüberbrückungskupplung ohne Bezugszeichen dargestellt. Mit dem Pumpenrad 5 des hydrodynamischen Wandlers 4 ist eine Pumpe 8 verbunden. Die Pumpe 8 fördert das Druckmedium aus dem Schmiermittelsumpf zu den Stellgliedern des CVT 3. Das Turbinenrad 6 bzw. die Wandlerüberbrückungskupplung treiben eine Turbinenwelle 9 an. Diese wiederum treibt eine Vorwärts-/Rückwärtsfahreinheit 10 an. Die Vorwärts-/Rückwärtsfahreinheit dient der Drehrichtungsumkehr. Die Vorwärts-/ Rückwärtsfahreinheit ist üblicherweise als ein Planetenwendegetriebe ausgeführt. Ausgangsgröße der Vorwärts-/Rückwärtsfahreinheit ist eine Primärwelle 11. Diese ist mit dem Variator 27 verbunden. Der Variator 27 besteht aus einem ersten Kegelscheibenpaar 12, einem zweiten Kegelscheibenpaar 14 und dem Umschlingungsorgan 13. Das Umschlingungsorgan 13 läuft zwischen den beiden Kegelscheibenpaaren 12 und 14. Das auf der Antriebsseite angeordnete erste Kegelscheibenpaar 12 besteht aus einer in axialer Richtung feststehenden Scheibe und der Primärscheibe. Mit der Primärscheibe ist eine hydraulische Verstelleinheit verbunden, üblicherweise in Zylinder-Kolben-Form ausgeführt. Das auf der Sekundärseite angeordnete zweite Kegelscheibenpaar 14 besteht aus einer in axialer Richtung feststehenden Kegelscheibe und der Sekundärscheibe. Die Sekundärscheibe weist ebenfalls eine hydraulische Verstelleinheit aus. Die Übersetzung des Getriebes wird verändert, indem die Position der Primärscheibe geändert wird. Dadurch ändert sich bekanntermaßen der Laufradius des Umschlingungsorgans 13. Über die axiale Position der Sekundärscheibe wird der Anpreßdruck Kegelscheibe/Umschlingungsorgan, somit die Momentenübertragungsfähigkeit, bestimmt. Der Variator 27 ist mit einer Sekundärwelle 15 verbunden.
Eine Zwischenwelle 16 ist mit der Sekundärwelle 15 über ein Zahnradpaar verbunden. Die Zwischenwelle 16 dient der Drehrichtungsumkehr und einer Drehmoment- und Drehzahlanpassung. Die Zwischenwelle 16 wiederum ist über ein Zahnradpaar mit dem Differential 17 verbunden. Ausgangsgröße des Differentials 17 sind die beiden Achshalbwellen 18A und 18B, die auf die Antriebsräder eines nicht dargestellten Fahrzeugs führen.
Das elektronische Steuergerät 19 steuert über elektro-magnetische Stellglieder das CVT 3. Vom elektronischen Steuergerät 19 sind in stark vereinfachter Form als Funktionsblöcke der Micro-Controller 20, ein Funktionsblock Steuerung Stellglieder 21 und ein Funktionsblock Berechnung 22 dargestellt. Am elektronischen Steuergerät 19 sind Eingangsgrößen 23 angeschlossen. Eingangsgrößen 23 sind zum Beispiel das Signal einer Drosselklappe, das Signal der Drehzahl der Antriebseinheit, die Temperatur des Druckmediums und das Druckniveau der Sekundärscheibe bzw. der Systemdruck. Als weitere Eingangsgrößen sind die Drehzahlen der Primärscheibe 25 und der Sekundärscheibe 26 eingezeichnet. Der Micro-Controller berechnet mittels des Funktionsblockes 22 aus den Eingangsgrößen 23 bzw. Drehzahlen 25 und 26 die Funktionsparameter für das CVT 3. Diese werden mittels des Funktionsblockes Steuerung Stellglieder 21 über elektro-magnetische Stellglieder, welche sich im hydraulischen Steuergerät 24 befinden, eingestellt. Als Funktionsparameter des CVT 3 bzw. Ausgangsgrößen des hydraulischen Steuergerätes 24 sind die Drücke für die Primärscheibe, Sekundärscheibe, der Systemdruck und der Kupplungs- bzw. Bremsdruck für die Vorwärts-/Rückwärtsfahreinheit dargestellt.

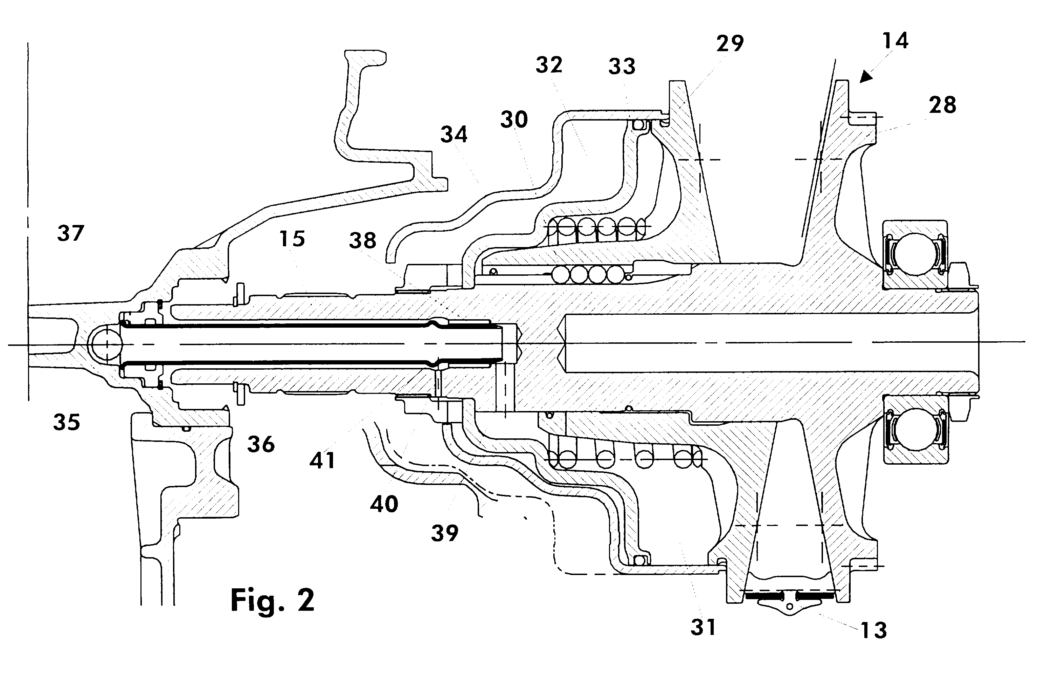

Fig. 2 zeigt ein Schnittbild der Sekundärwelle 15 mit dem auf der Sekundärwelle angeordneten Kegelscheibenpaar 14. Das Kegelscheibenpaar 14 besteht aus der in axialer Richtung nicht verschiebbaren Kegelscheibe 28 und der in axialer Richtung verschiebbaren Sekundärscheibe 29. Zwischen diesen beiden Kegelscheiben läuft das Umschlingungsorgan 13. Die axiale Verschiebbarkeit der Sekundärscheibe 29 und die Momentübertragung Sekundärscheibe auf Sekundärwelle 15 geschieht über Kugeln 30. In Fig. 2 ist oberhalb der Symmetrieachse, die Symmetrieachse ist hier als strichpunktierte Linie dargestellt, die Kegelscheibenposition für eine Übersetzung < 1 dargestellt. Unterhalb der Symmetrielinie ist die Kegelscheibenposition für eine Übersetzung > 1, zum Beispiel beim Anfahren, dargestellt. Die Verstellung der Sekundärscheibe 29 geschieht über eine Zylinder-Kolben-Einheit. Diese besteht aus der Sekundärscheibe 29, einer feststehenden Wand 33 und einer beweglichen Wand 34. Diese Zylinder-Kolben-Einheit beinhaltet eine erste Kammer 31 und eine zweite Kammer 32. Über das Druckniveau in der ersten Kammer 31 wird nun die axiale Position der Sekundärscheibe 29 bestimmt. Das Druckniveau der zweiten Kammer 32 dient dem dynamischen Druckausgleich. Bekanntermaßen verursacht die Rotation aufgrund der Fliehkraft eine ungleichmäßige Verteilung des Druckmediums und eine zusätzliche Kraft, die drehzahlabhängig ist. Diese axiale Kraftkomponente ist somit eine Störgröße. Über ein entsprechendes Druckniveau in der zweiten Kammer wird nun diese Störgröße kompensiert. Die Sekundärwelle 15 ist als Hohlwelle ausgebildet. In einem hohlen Abschnitt der Sekundärwelle 15 befindet sich ein Druckzuführungsrohr 36. Das Druckzuführungsrohr 36 weist einen geringeren Durchmesser als der hohle Abschnitt der Sekundärwelle 15 auf. Das Druckzuführungsrohr 36 ist auf der einen Seite fest in einem Getriebegehäuse 37 eingespannt. Auf der anderen Seite stützt sich das Druckzuführungsrohr 36 über ein Lager 38 im hohlen Abschnitt der Sekundärwelle 15 ab. Die Druckzuführung zur ersten Kammer 31 erfolgt über eine externe Druckzuführung 35, via Innenseite Druckzuführungsrohr 36 und Bohrung 39. Die zweite Kammer 32 wird mit Druckmedium ebenfalls aus der Innenseite des Druckzuführungsrohres 36, via Lager 38 und Bohrung 40, versorgt. Das Lager 38 dient hierbei als Spaltabdichtung. Über das radiale Spiel Druckzuführungsrohr/Lager kann der Volumenstrom für die zweite Kammer 32 begrenzt werden. Im Bereich der Bohrung 40 weist das Druckzuführungsrohr 36 einen Wulst 41 auf. Dadurch wird das Druckmedium, welches das Lager 38 passiert hat, in Richtung der Bohrung 40 umgelenkt.
Durch die in Fig. 2 dargestellte Einrichtung werden sowohl die erste Kammer 31 als auch die zweite Kammer 32 über die Innenseite des Druckzuführungsrohres 36 mit Druckmedium versorgt. Gegenüber dem Stand der Technik besteht nun ein erster Vorteil darin, daß nur noch eine einzige externe Druckzuführung 35 notwendig ist. Ein zweiter Vorteil besteht darin, daß das Druckzuführungsrohr 36 fest mit dem Getriebegehäuse verbunden ist. Dadurch werden Undichtigkeiten an dieser Stelle vermieden. Beim Stand der Technik stützt sich das Druckzuführungsrohr über eine Buchse im Getriebegehäuse ab. Dadurch kann es an dieser Stelle aufgrund verschiedener Wärmeausdehnungskoeffizienten des Getriebegehäuses und der Buchse zu Undichtigkeiten kommen.

### Bezugszeichen

- 1: Antriebseinheit
- 2: Antriebswelle
- 3: CVT
- 4: hydrodynamischer Wandler
- 5: Pumpenrad
- 6: Turbinenrad
- 7: Leitrad
- 8: Pumpe
- 9: Turbinenwelle
- 10: Vorwärts-/Rückwärtsfahreinheit
- 11: Primärwelle
- 12: erstes Kegelscheibenpaar
- 13: Umschlingungsorgan
- 14: zweites Kegelscheibenpaar
- 15: Sekundärwelle
- 16: Zwischenwelle
- 17: Differential
- 18A: Achshalbwelle
- 18B: Achshalbwelle
- 19: elektronisches Steuergerät
- 20: Micro-Controller
- 21: Funktionsblock Steuerung Stellglieder
- 22: Funktionsblock Berechnung
- 23: Eingangsgrößen
- 24: hydraulisches Steuergerät
- 25: Drehzahl Primärscheibe
- 26: Drehzahl Sekundärscheibe
- 27: Variator
- 28: Kegelscheibe, feststehend
- 29: Sekundärscheibe
- 30: Kugeln
- 31: erste Kammer
- 32: zweite Kammer
- 33: feststehende Wand
- 34: bewegliche Wand
- 35: externe Druckzuführung
- 36: Druckzuführungsrohr
- 37: Getriebegehäuse
- 38: Lager
- 39: Bohrung
- 40: Bohrung
- 41: Wulst

## Patentansprüche

1. Einrichtung für die Druckmittelzufuhr zu einer Zylinder-Kolben-Einheit eines stufenlos arbeitenden Kegelscheibenumschlingungsgetriebes (3) mit folgenden Merkmalen:
- das Kegelscheibenumschlingungsgetriebe (3) besteht aus einem auf einer Primärwelle (11) angeordneten ersten Kegelscheibenpaar (12) und einem auf einer Sekundärwelle (15) angeordneten zweiten Kegelscheibenpaar (14) und einem Umschlingungsorgan (13), welches zwischen den beiden Kegelscheibenpaaren (12, 14) umläuft,
- das auf der Primärwelle (11) angeordnete erste Kegelscheibenpaar besteht aus einer in axialer Richtung feststehenden Kegelscheibe und einer in axialer Richtung beweglichen Primärscheibe,
- das auf der Sekundärwelle (15) angeordnete Kegelscheibenpaar besteht aus einer in axialer Richtung feststehenden Kegelscheibe (28) und einer in axialer Richtung beweglichen Sekundärscheibe (29),
- die Sekundärscheibe (29) ist Teil der Zylinder-Kolben-Einheit, welche eine erste Kammer (31) und eine zweite Kammer (32) umfaßt, wobei über das Druckniveau der ersten Kammer (31) die axiale Position der Sekundärscheibe (29) verändert wird und über das Druckniveau der zweiten Kammer (32) ein dynamischer Druckausgleich stattfindet,
- die Sekundärwelle (15) weist einen Hohlwellenabschnitt auf, wobei sich im Inneren des Hohlwellenabschnitts ein Druckzuführungsrohr (36) befindet,
- sowohl die erste Kammer (31) als auch die zweite Kammer (32) werden durch das Innere des Druckzuführungsrohrs (36) befüllt und
- das Druckzuführungsrohr (36) ist auf der einen Seite mit einem Druckkanal im Getriebegehäuse (37) verbunden und stützt sich auf der anderen Seite gegen die Sekundärwelle (15) in derem Hohlwellenabschnitt über ein Lager (38) ab,
dadurch **gekennzeichnet,** daß das Druckzuführungsrohr (36) auf der einen Seite axial und radial fest in das Getriebegehäuse (37) eingespannt ist.

2. Einrichtung nach Anspruch 1, dadurch **gekennzeichnet ,** daß das Lager (38) im hohlen Abschnitt der Sekundärwelle (15) eingepreßt ist, das Lager (38) als Spaltabdichtung dient und über dieses Lager (38) die zweite Kammer (32) mit Druckmedium befüllt wird.

3. Einrichtung nach Anspruch 1 oder 2, dadurch **gekennzeichnet,** daß das Druckzuführungsrohr (36) zwischen dem gehäusefesten Ende und dem Lager (38) einen radial verlaufenden Wulst (41) aufweist.

4. Einrichtung nach Anspruch 2 oder 3, dadurch **gekennzeichnet ,** daß über das radiale Spiel, Lager (38)/Druckzuführungsrohr (36), der Volumenstrom für die zweite Kammer (32) definiert ist.

5. Einrichtung für die Druckmittelzufuhr zu einer Zylinder-Kolben-Einheit eines stufenlos arbeitenden Kegelscheibenumschlingungsgetriebes (3) mit folgenden Merkmalen:
- das Kegelscheibenumschlingungsgetriebe (3) besteht aus einem auf einer Primärwelle (11) angeordneten ersten Kegelscheibenpaar (12) und einem auf einer Sekundärwelle (15) angeordneten zweiten Kegelscheibenpaar (14) und einem Umschlingungsorgan (13), welches zwischen den beiden Kegelscheibenpaaren (12, 14) umläuft,
- das auf der Primärwelle (11) angeordnete erste Kegelscheibenpaar besteht aus einer in axialer Richtung feststehenden Kegelscheibe und einer in axialer Richtung beweglichen Primärscheibe,
- das auf der Sekundärwelle (15) angeordnete Kegelscheibenpaar besteht aus einer in axialer Richtung feststehenden Kegelscheibe (28) und einer in axialer Richtung beweglichen Sekundärscheibe (29),
- die Sekundärscheibe (29) ist Teil der Zylinder-Kolben-Einheit, welche eine erste Kammer (31) und eine zweite Kammer (32) umfaßt, wobei über das Druckniveau der ersten Kammer (31) die axiale Position der Sekundärscheibe (29) verändert wird und über das Druckniveau der zweiten Kammer (32) ein dynamischer Druckausgleich stattfindet,
- die Sekundärwelle (15) weist einen Hohlwellenabschnitt auf, wobei sich im Inneren des Hohlwellenabschnitts ein Druckzuführungsrohr (36) befindet,
- sowohl die erste Kammer (31) als auch die zweite Kammer (32) werden durch das Innere des Druckzuführungsrohrs (36) befüllt und
- das Druckzuführungsrohr (36) ist auf der einen Seite mit einem Druckkanal im Getriebegehäuse (37) verbunden und stützt sich auf der anderen Seite gegen die Sekundärwelle (15) in derem Hohlwellenabschnitt ab,
dadurch **gekennzeichnet,** daß das Druckzuführungsrohr (36) auf der einen Seite axial und radial fest in das Getriebegehäuse (37) eingespannt ist und sich auf der anderen Seite über einen Rechteckring abstützt, wobei die zweite Kammer (32) über diesen Rechteckring mit Druckmedium befüllt wird.

## Claims

1. Device for supplying pressure medium to a cylinder/piston unit of a continuously variable conical disk/wrapping transmission (3) having the following features:
- the conical disk/wrapping transmission (3) comprises a first conical disk pair (12) disposed on a primary shaft (11) and a second conical disk pair (14) disposed on a secondary shaft (15) and a wrapping organ (13), which revolves between the two conical disk pairs (12, 14),
- the first conical disk pair disposed on the primary shaft (11) comprises an axially fixed conical disk and an axially movable primary disk,
- the conical disk pair disposed on the secondary shaft (15) comprises an axially fixed conical disk (28) and an axially movable secondary disk (29),
- the secondary disk (29) is part of the cylinder/piston unit, which comprises a first chamber (31) and a second chamber (32), wherein by means of the pressure level of the first chamber (31) the axial position of the secondary disk (29) is varied and by means of the pressure level of the second chamber (32) a dynamic pressure compensation occurs,
- the secondary shaft (15) has a hollow shaft portion, wherein a pressure supply pipe (36) is situated in the interior of the hollow shaft portion,
- both the first chamber (31) and the second chamber (32) are filled through the interior of the pressure supply pipe (36) and
- the pressure supply pipe (36) at the one end is connected to a pressure channel in the transmission case (37) and at the other end is supported via a bearing (38) against the secondary shaft (15) in the hollow shaft portion of the latter,
characterized in that the pressure supply pipe (36) at the one end is axially and radially firmly clamped into the transmission case (37).

2. Device according to claim 1, characterized in that the bearing (38) is pressed in the hollow portion of the secondary shaft (15), the bearing (38) serves as a diaphragm seal and the second chamber (32) is filled with pressure medium via said bearing (38).

3. Device according to claim 1 or 2, characterized in that the pressure supply pipe (36) has a radially extending bead (41) between the case-fixed end and the bearing (38).

4. Device according to claim 2 or 3, characterized in that the volume rate of flow for the second chamber (32) is defined by the radial clearance between bearing (38) and pressure supply pipe (36).

5. Device for supplying pressure medium to a cylinder/piston unit of a continuously variable conical disk/wrapping transmission (3) having the following features:
- the conical disk/wrapping transmission (3) comprises a first conical disk pair (12) disposed on a primary shaft (11) and a second conical disk pair (14) disposed on a secondary shaft (15) and a wrapping organ (13), which revolves between the two conical disk pairs (12, 14),
- the first conical disk pair disposed on the primary shaft (11) comprises an axially fixed conical disk and an axially movable primary disk,
- the conical disk pair disposed on the secondary shaft (15) comprises an axially fixed conical disk (28) and an axially movable secondary disk (29),
- the secondary disk (29) is part of the cylinder/piston unit, which comprises a first chamber (31) and a second chamber (32), wherein by means of the pressure level of the first chamber (31) the axial position of the secondary disk (29) is varied and by means of the pressure level of the second chamber (32) a dynamic pressure compensation occurs,
- the secondary shaft (15) has a hollow shaft portion, wherein a pressure supply pipe (36) is situated in the interior of the hollow shaft portion,
- both the first chamber (31) and the second chamber (32) are filled through the interior of the pressure supply pipe (36) and
- the pressure supply pipe (36) at the one end is connected to a pressure channel in the transmission case (37) and at the other end is supported against the secondary shaft (15) in the hollow shaft portion of the latter,
characterized in that the pressure supply pipe (36) at the one end is axially and radially firmly clamped into the transmission case (37) and at the other end is supported via a plain compression ring, wherein the second chamber (32) is filled with pressure medium via said plain compression ring.

## Revendications

1. Système pour l'amenée de pression à une unité cylindre/piston d'une transmission variable en continu à poulies coniques avec organe d'entraînement (3) présentant les caractéristiques suivantes :
- la transmission à poulies coniques avec organe d'entraînement (3) se compose d'une première paire de disques coniques (12) montée sur un arbre primaire (11), d'une deuxième paire de disques coniques (14) montée sur un arbre secondaire (15) et d'un organe d'entraînement (13) qui tourne entre les deux paires de disques coniques (12, 14),
- la première paire de disques coniques montée sur l'arbre primaire (11) se compose d'un disque conique fixe dans le sens axial et d'un disque primaire mobile dans le sens axial,
- la paire de disques coniques montée sur l'arbre secondaire (15) se compose d'un disque conique (28) fixe dans le sens axial et d'un disque secondaire (29) mobile dans le sens axial,
- le disque secondaire (29) est une partie constituante de l'unité cylindre/piston qui comprend une première chambre (31) et une deuxième chambre (32), la position axiale du disque secondaire (29) étant variée par le niveau de pression de la première chambre (31) et une compensation dynamique de la pression étant effectuée par le niveau de pression de la deuxième chambre (32),
- l'arbre secondaire (15) présente une section d'arbre creuse, un tube d'amenée de pression (36) se trouvant à l'intérieur de cette section creuse,
- la première chambre (31) ainsi que la deuxième chambre (32) sont alimentées par l'intérieur du tube d'amenée de pression (36), et
- le tube d'amenée de pression (36) est relié d'un côté à un canal de pression dans le carter d'engrenages (37) et s'engage de l'autre côté, par l'intermédiaire d'un coussinet (38), avec l'arbre secondaire (15) dans la section d'arbre creuse de celui-ci,
**caractérisé** en ce que le tube d'amenée de pression (36) est fermement enserré par un côté, dans le sens axial et dans le sens radial, dans le carter d'engrenages (37).

2. Système selon la revendication 1, **caractérisé** en ce que le coussinet (38) est fixé par pression dans la section creuse de l'arbre secondaire (15), le coussinet servant comme dispositif d'étanchéité, et la deuxième chambre (32) étant alimentée en fluide sous pression par l'intermédiaire de ce coussinet (38).

3. Système selon la revendication 1 ou 2, **caractérisé** en ce que le tube d'amenée de pression (36) présente un renflement (41) s'étendant dans le sens radial, entre l'extrémité solidaire du carter et le coussinet (38).

4. Système selon la revendication 2 ou 3, **caractérisé** en ce que le flux de volume pour la deuxième chambre (32) est défini par le jeu radial coussinet (38)/tube d'amenée de pression (36).

5. Système pour l'amenée de fluide sous pression vers une unité cylindre/piston d'une transmission variable en continu à disques coniques et organe d'entraînement (3) présentant les caractéristiques suivantes :
- la transmission à disques coniques et organe d'entraînement (3) se compose d'une première paire de disques coniques (12) montée sur un arbre primaire (11), d'une deuxième paire de disques coniques (14) montée sur un arbre secondaire (15) et d'un organe d'entraînement (13) qui tourne entre les deux paires de disques coniques (12, 14)
- la première paire de disques coniques, montée sur l'arbre primaire (11), se compose d'un disque conique fixe dans le sens axial et d'un disque primaire mobile dans le sens axial,
- la paire de disques coniques, montée sur l'arbre secondaire (15), se compose d'un disque conique (28) fixe dans le sens axial et d'un disque secondaire (29) mobile dans le sens axial,
- le disque secondaire (29) est partie constituante de l'unité cylindre/piston qui comprend une première chambre (31) et une deuxième chambre (32), la position axiale du disque secondaire (29) étant variée par le niveau de pression de la première chambre (31), et une compensation dynamique de la pression étant effectuée par le niveau de pression de la deuxième chambre (32),
- l'arbre secondaire (15) présente une section d'arbre creuse, un tube d'amenée de pression (36) se trouvant à l'intérieur de cette section d'arbre creuse,
- la première chambre (31) ainsi que la deuxième chambre (32) sont alimentées par l'intérieur du tube d'amenée de pression (36), et
- le tube d'amenée de pression (36) est relié d'un côté à un canal de pression dans le carter d'engrenages (37) et s'engage de l'autre côté, par l'intermédiaire d'un coussinet (38), avec l'arbre secondaire (15) dans la section creuse de celui-ci,
**caractérisé** en ce que le tube d'amenée de pression (36) est enserré sur un côté, dans le sens axial et dans le sens radial, dans le carter d'engrenages (37) et s'engage de l'autre côté, au moyen d'un segment à section rectangulaire, dans la section creuse de l'arbre secondaire, la deuxième chambre (32) étant alimentée en fluide sous pression par l'intermédiaire de ce segment à section rectangulaire.
